# EUROPEAN PATENT SPECIFICATION

(11) **EP 0 740 883 B1**
(45) Date of publication and mention of the grant of the patent: **12.01.2000**
(21) Application number: 95932162.1
(22) Date of filing: 11.10.1995
(51) Int. Cl.: H04N 5/32

(54) **IMAGE PICK-UP APPARATUS**
BILDAUFNAHMEGERÄT
APPAREIL DE PRISE D'IMAGES

(30) Priority: 21.11.1994 NL 9420337
(43) Date of publication of application: 06.11.1996
(73) Proprietor: Koninklijke Philips Electronics N.V., 5621 BA Eindhoven (NL)
(72) Inventor: DILLEN, Bartholomeus, Goverdina, Maria, Henricus, NL-5621 BA Eindhoven (NL)
(74) Representative: Cohen, Julius Simon
(86) International application number: IB9500862
(87) International publication number: WO9616510

(56) References cited:
- US-A- 5 187 730
- US-A- 5 434 418
- US-A- 5 444 756

## Description

The invention relates to an image pick-up apparatus which comprises an image sensor for converting a light image into an electronic image and a control circuit for switching the image sensor between image pick-up and image read-out, which light image is formed during an image period succeeded by an afterglow period during which a light intensity of the light image decreases.

The invention also relates to a method for converting such a light image into an electronic image by by means of an image sensor and for switching the image sensor to image read-out in order to read out the electronic image as an electronic image signal.

An image pick-up apparatus of this kind is used, for example for picking up a series of light images of an object or a series of light images on an exit window of an X-ray image intensifier which are derived from a series of X-ray images formed by irradiation of an object by means of pulsed X-rays. In the context of the present invention a light image is to be understood to mean an image consisting of visible light, but also an image consisting of ultraviolet or infrared radiation.

An image pick-up apparatus of this kind is known from United States Patent **US 4 604 992**.

The conventional image pick-up apparatus described therein utilizes an image sensor which is known *per se.* This image sensor comprises light-sensitive sensor elements which convert light incident on the image sensor during image pick-up into an electronic image of charge packets having an electric charge corresponding to the intensity of the incident light. When the image sensor is read out, the charge packets are transported to a read-out register and converted into an electronic image signal. The known image pick-up apparatus comprises a mechanically movable shutter whereby the sensor elements are shielded from incident light during the reading out of the electronic image. The shutter is open during image pick-up so that incident light can reach the sensor elements. The shielding of the sensor elements ensures that the electronic image will not be disturbed by light incident during reading out. It is notably when a light image is picked up from a phosphor layer on, for example an exit window of an X-ray image intensifier, that, if no steps are taken, the electronic image is liable to be disturbed by afterglow of the phosphor; during image read-out light is then absorbed as yet in the sensor elements and converted into an electric charge.

The mechanically movable shutter of the known image pick-up apparatus can be opened and closed at a comparatively low speed only, so that the known image pick-up apparatus is not suitable for picking up a succession of images at a high image rate, for example more than 10 images per second, without disturbances. Furthermore, the known image pick-up apparatus comprises a mechanical drive mechanism for the shutter which is complex, expensive and susceptible to wear. Moreover, the European patent application **EP 667 711** describes an x-ray machine with a solid state radiation detector. This European patent application is included in the state of the art pursuant to Art 54(3)EPC. This European patent application mentions a radiation detector that is read-out just after the maximum radiation intensity in the x-ray exposure has occurred.

An object of the invention to provide an image pick-up apparatus which is suitable for picking up a series of images at a high image rate and in which the disturbing of picked-up images by light incident on the image sensor is counteracted.

To this end, in the image pick-up apparatus in accordance with the invention the control circuit is arranged to generate an image read-out signal which indicates a nearly vanishing light intensity at an end of the afterglow period and to switch the image sensor to image read-out by way of said image read-out signal.

Because in an image pick-up apparatus in accordance with the invention image read-out commences only after the light intensity of the light image being picked up has nearly vanished, hardly any or no light will be incident on the sensor elements of the image sensor during the reading out of the electronic image, thus avoiding the disturbing of the electronic image by light incident during the reading out, for example due to afterglow of a phosphor layer on the exit window of an X-ray image intensifier on which the light image derived from an X-ray image is formed. In an image pick-up apparatus in accordance with the invention it is ensured notably that the electronic image is not smeared when it is read out line-by-line. Furthermore, the image pick-up apparatus in accordance with the invention does not require a mechanically movable shutter, because the control circuit ensures that the image sensor is not read out for as long as the image sensor is still being illuminated.

The image sensor comprises a matrix of rows and columns with a large number of light-sensitive sensor elements, each of which is constructed, for example as a metal-oxide-semiconductor (MOS) photodiode. During image pick-up, an electric pick-up voltage is applied to gate electrodes of the photodiodes, which pick-up voltage sets the photodiodes to a depletion state so that so that the photodiodes collect electric charge carriers released by absorption of light. In order to read out the electronic image consisting of the collected electric charges, read-out voltages are applied to gate contacts of successive rows of sensor elements in order to transfer the collected electric charges to a read-out register in order to form an electronic image signal from the charges by means of an amplifier. In the image pick-up apparatus in accordance with the invention switching over from image pick-up to image read-out takes place by changing the electric voltages applied to the gate contacts; the switching time required for changing over is short, for example a few microseconds. The read-out time, being the time required to read out an electronic image, is proportional to the number of sensor elements and amounts to, for example 20 ms in the case of an image sensor comprising 1000 x 1000 sensor elements. The exposure time, during which an electronic image is derived from a light image, amounts to from a few ms to 10 ms.

A fast phosphor having an afterglow period of approximately 3 ms can be used on the exit window in X-ray image intensifiers, but it is also very well possible to use phosphors having an even shorter afterglow period, for example less than 1 ms. The image pick-up apparatus in accordance with the invention is suitable for picking up a series of light images from the exit window of an X-ray image intensifier at a high image rate, for example many dozens of images per second, without the electronic images formed from the light images being disturbed by light incident during reading out.

In a preferred embodiment of an image pick-up apparatus in accordance with the invention the image pick-up apparatus comprises an auxiliary light detection system for deriving a light intensity signal from the light intensity of the light image, and that the control circuit is arranged to generate the image read-out signal in dependence on the light intensity signal.

The auxiliary light detection system comprises a photosensor which derives a light intensity signal from the light image picked up, which light intensity signal represents the light intensity of said light image. On the basis of the decrease of the light intensity of the light intensity signal the control circuit establishes the end of the afterglow period, or it establishes the end of the image period on the basis of the saturation of the light intensity. In conformity with the established end of the afterglow period or of the image period, the control circuit applies the image read-out signal to the image sensor in order to commence the reading out of the image after expiration of the afterglow period.

In a further preferred embodiment of an image pick-up apparatus in accordance with the invention the control circuit is provided with a delay circuit in order to apply the image read-out signal to the image sensor with a delay after the reception of a stop signal indicating the end of the image period.

The end of the image period of the light image picked up is signalled by means of a stop signal received by the delay circuit. The delay circuit ensures that after a waiting period the image read-out signal is applied to the image sensor in order to switch the image sensor to image read-out. Because the image sensor is switched to image read-out only after a waiting period after the end of the image period of the light image picked up, the disturbing of the electronic image is counteracted because image read-out is performed when no light which could disturb the electronic image is incident on the sensor elements.

The waiting period at least equals the duration of the afterglow period and can be determined, for example empirically in dependence on various circumstances in which light images are generated.

It is a further object of the invention to provide an X-ray examination apparatus for forming an X-ray image on an entrance screen of an X-ray image intensifier by irradiating an object by means of an X-ray beam emitted by an X-ray source, which apparatus is suitable for forming a series of successive X-ray images at a high image rate and for converting these images into electronic images, the disturbing of successive electronic images by light incident on the image sensor during the reading out of an electronic image being counteracted as well as possible.

Said further object of the invention is achieved by providing an X-ray examination apparatus with an image pick-up apparatus in accordance with the invention for picking up a light image which is derived from the X-ray image on an exit window of the X-ray image intensifier.

A preferred embodiment of an X-ray examination apparatus comprises an image pick-up apparatus in accordance with the invention for picking up a light image derived from the X-ray image on an exit window of the X-ray image intensifier, the X-ray source being coupled to an input of the control circuit in order to apply the stop signal to the control circuit at the end of an X-ray pulse. At the end of an X-ray pulse the X-ray source applies the stop signal to the control circuit of the image pick-up apparatus. For example, the stop signal is supplied by the high-voltage power supply of the X-ray source. The end of the X-ray pulse corresponds to the end of the image period of a light image derived therefrom on the exit window of the X-ray image intensifier. In an X-ray examination apparatus in accordance with the invention, image read-out commences a short or longer waiting period after the end of the X-ray pulse, so that the electronic image formed cannot be disturbed, for example by afterglow of the phosphor layer. Because the image pick-up apparatus can be switched between image pick-up and image read-out within a very short period of time, the X-ray examination apparatus is capable of forming a series of X-ray images at a high image rate without the diagnostic image quality of the electronic images formed from the X-ray images being degraded during the reading out of the image sensor, for example by afterglow of the phosphor layer.

It is also an object of the invention to provide a method which is suitable for picking up a series of images at a high image rate by means of an image pick-up apparatus provided with an image sensor and which ensures that light incident on the image sensor cannot disturb images picked up. To this end, in the method in accordance with the invention an image read-out signal is generated which indicates a nearly vanishing light intensity at an end of the afterglow period, the image sensor being switched to image read-out by said signal.

The disturbing of the picked up electronic image during reading out, for example smearing of the image, is counteracted in that the electronic image is read out only when the image sensor is no longer illuminated.

These and other aspects of the invention will be apparent from and elucidated with reference to the accompanying drawings and the embodiments described hereinafter.

In the drawings:
Fig. 1 is a diagrammatic view of an image pick-up apparatus in accordance with the invention;
Fig. 2 is a graphic representation of the control of the image pick-up apparatus in accordance with the invention, and
Fig. 3 is a diagrammatic representation of an X-ray examination apparatus comprising an image pick-up apparatus in accordance with the invention.

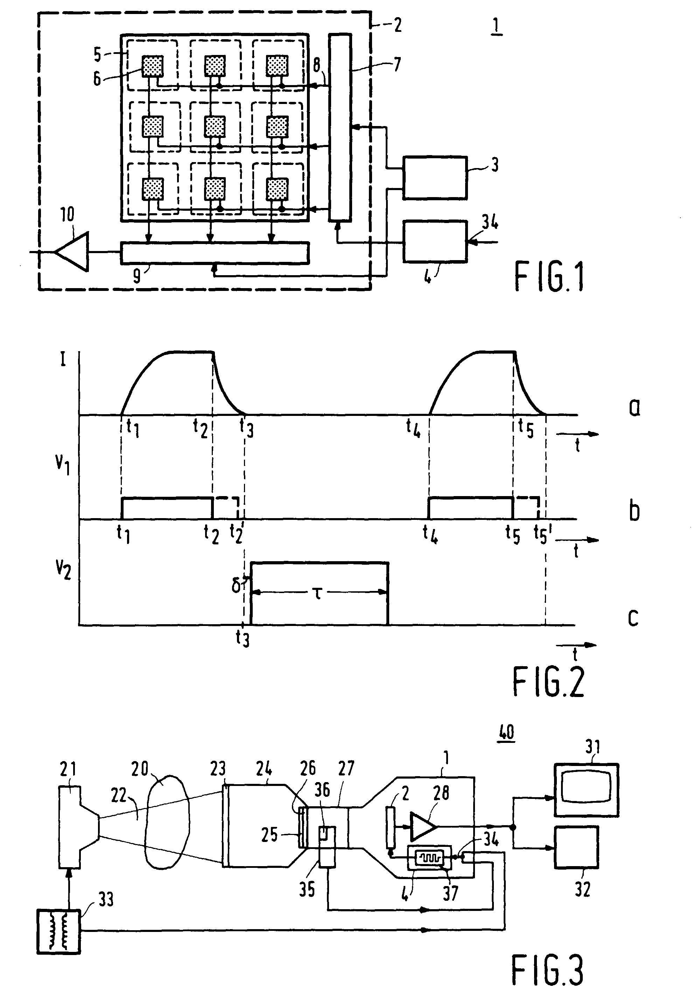

Fig. 1 shows diagrammatically an image pick-up apparatus 1 in accordance with the invention, comprising an image sensor 2 which operates with a clock generator 3 and a control circuit 4. The image sensor 2 comprises a large number of light-sensitive sensor elements 5, for example in the form of charge-coupled MOS photodiodes, each of which comprises a gate electrode 6. For the sake of simplicity, the drawing shows only a 3 x 3 matrix of light-sensitive sensor elements, but in practice a much larger matrix, for example a matrix comprising 1000 x 1000 light-sensitive sensor elements, can be used so as to pick up images with a high spatial resolution. In order to pick up an incident light image, a row drive circuit 7, being coupled to the gate electrodes 6 by way of control lines 8 per row, applies an electric pick-up voltage to the gate electrodes 6 in order to adjust the photodiodes to a depletion state so that absorption of light incident on the photodiodes, for example visible light or infrared or ultraviolet radiation, releases charge carriers in the semiconductor material which are collected in the light-sensitive sensor elements. The collected charge packets constitute an electronic image, the charges of each of the charge packets corresponding to the accumulated amount of light incident on the relevant sensor element. In order to read out the electronic image picked up, the row drive circuit 7 applies a read-out voltage to the control lines 8 of successive rows, the collected charges being transferred to a read-out register 9 under the influence of said read-out voltage, after which they are applied to a preamplifier 10 which forms an electronic image signal from the charges. The electric pick-up and read-out voltages applied to the gate electrodes are selected by means of the control circuit 4 and the clock generator 3 synchronizes the successive application of the electric read-out voltages to successive rows and the reading-out of the read-out register 9.

Fig. 2 is a graphic representation of the control of the image pick-up apparatus in accordance with the invention. In a diagram a the light intensity I of successive light images, for example formed on the phosphor layer of the exit window of an X-ray image intensifier tube, is plotted along a time axis. At the instant t₁ the image period of a first light image commences, for example in that an X-ray source is switched on and an X-ray image is formed on the entrance screen of the X-ray image intensifier, which X-ray image is converted into said first light image on the exit window. The light intensity initially increases until a saturation level is reached and as from an instant t₂, being the end of the image period, the light intensity of the first light image decreases during the afterglow period, for example in that the X-ray source is switched off at t₂. Because of the afterglow of the phosphor, some time will elapse, up to the instant t₃ which is the end of the afterglow period, until the light intensity has nearly vanished. At a later instant t₄ the image period of a second light image on the exit window commences, so that the light intensity increases again until the end of the image period of the second image at the instant t₅, after which the light intensity decreases due to afterglow of the phosphor. Diagram b shows, plotted along the time axis, the periods during which the pick-up voltage is applied to the image sensor. During the image periods [t₁, t₂] and [t₄, t₅] an electric pick-up voltage V₁ is selected by the control circuit 4 and applied to the gate electrodes 6 by the row drive circuit 7, by way of the control lines 8, in order to set the photodiodes to a depletion state. For as long as the electric pick-up voltage V₁ is applied, electric charges released by the incident radiation are integrated in the light-sensitive sensor elements. The integration time tᵢₙₜ = t₁-t₂ amounts to, for example from 1 to 10 ms, depending on the light intensity. The integration time is dependent on the technique used to pick up the X-ray image; for example, fluoroscopy produces light images of low light intensity on the exit window, whereas light images of high light intensity are formed in the case of X-ray exposures using a higher X-ray dose. The afterglow time (τ' = t₃- t₂), being the duration of the afterglow period, of the phosphor may amount to approximately 3 ms when a fast phosphor is used in the X-ray image intensifier; however, it is also very well possible to use phosphors having an even shorter afterglow time, for example shorter than one millisecond. In order to integrate more charge carriers, integration may be continued in the afterglow period by continuing the application of the electric pick-up voltage for the first image until an instant t₂', situated between t₁ and t₃, and analogously until an instant t₅' for the second image. Diagram c shows, plotted along the time axis, the periods during which the read-out voltage is applied to the image sensor. The control circuit 4 selects an electric read-out voltage V₂ and, under the control of the clock generator 3 with the row drive circuit 7 and the control lines 8, this voltage is successively applied, in the form of clock voltages, to rows of gate electrodes in order to transfer the charges row-by-row to the read-out register 9. The control circuit switches the image sensor to image read-out by applying the electric read-out voltage to the image sensor after the light intensity of an image pick-up has nearly or completely vanished. To this end, an input terminal 34 of the control circuit receives the stop signal indicating the end of the image period of a light image and after a waiting period which is slightly longer, for example δ, than the afterglow period, after reception of the stop signal, the control circuit supplies the image read-out signal in order to switch the image sensor to image read-out. After the picking up of the first image, the image sensor is switched to image read-out at an instant which is coincident with or very slightly later (δ) than t₃, so that the afterglow of the phosphor has ceased when image read-out commences; consequently, during image read-out the electronic image picked up is not disturbed by incident light. When the first image has been read, if desired the control circuit can switch the image sensor to image pick-up again, so that the image sensor is ready again for picking up a next image, for example the second image whose light intensity starts to increase at the instant t₄. The read-out time r required to read out the image sensor is approximately proportional to the number of sensor elements of the image sensor; in the case of 1000 x 1000 sensor elements, τ amounts to approximately 20 ms and in the case of 500 x 500 sensor elements it amounts to approximately 5 ms. The time required for picking up and reading out an image by means of the image pick-up apparatus in accordance with the invention equals tᵢₙₜ+τ'+δ+τ and hence amounts to approximately from 7 ms to 33 ms, so that the image pick-up apparatus is suitable for operation with an image rate of 30 images per second or even for operation with a high image rate of more than 100 images per second.

Fig. 3 is a diagrammatic representation of an X-ray examination apparatus 40 comprising an image pick-up apparatus in accordance with the invention. By irradiating an object 20, for example a patient to be examined, by means of an X-ray beam 22 emitted by an X-ray source 21, an X-ray image is formed on an entrance screen 23 of an X-ray image intensifier 24 as a result of differences in absorption within the patient; this results in a light image on a phosphor layer 25 provided on an exit window 26 of the X-ray image intensifier. *Via* an optical coupling 27, for example a lens system, the light emitted by the phosphor layer is imaged on the image sensor 2 of the image pick-up apparatus 1 arranged opposite the exit window. The light image on the phosphor layer is converted into an electronic image signal by the image sensor, and an amplifier 28 derives therefrom a video signal which is applied to a monitor 31 on which the image information contained in the video signal is visualized. The video signal may alternatively be applied to an image processing unit 32 for further processing.

The X-ray source 21 is driven by a high-voltage power supply 33 which applies the stop signal to the input terminal 34 of the control circuit when the X-ray source is switched off. Another stop signal or an additional stop signal is supplied by an auxiliary light detection system 35 which comprises a photosensor 36 which measures the light intensity of the phosphor layer and supplies a light intensity signal. The stop signal from the auxiliary light detection system is formed when the light intensity signal reaches a value which corresponds to the saturation of the light intensity at the end of the image period of the light image. The image read-out signal is derived from the stop signal from the auxiliary light detection system 35 and/or from the high-voltage power supply 33, so as to be applied to the input terminal of the control circuit which switches over the image sensor from image pick-up to image read-out *via* a delay circuit 35 with a delay amounting to approximately τ'+δ.

Alternatively, the control circuit 4 may be arranged to detect that the light intensity signal reaches a value which indicates near vanishing of the light intensity at the end of the afterglow period and to apply the image read-out signal to the image sensor to commence the image read-out, on the basis of such a detection.
An X-ray examination apparatus comprising a plurality of, for example two X-ray sources for irradiating a patient to be examined from different directions comprises a plurality of image intensifier pick-up chains. An X-ray image intensifier tube is then arranged opposite each X-ray source. Each of the image intensifier pick-up chains comprises an image pick-up apparatus in order to pick up X-ray images relating to different projections. Such a so-called biplane X-ray system is preferably used for cardiovascular examinatidns. In such a biplane X-ray system it is advantageous to provide an image pick-up apparatus in accordance with the invention for one projection direction with a control circuit which is arranged to generate an image read-out signal which indicates a nearly vanishing light intensity of a light image on the exit window of an X-ray image intensifier for another projection direction. This image read-out signal is used to switch the image sensor of the relevant image pick-up apparatus to 3 read-out mode so that the image being read out is not disturbed by afterglow of a light image relating to another projection direction. Cross-talk between image information of different projection directions is counteracted by commencing the image read-out only after near vanishing of the light intensity of one or more light images relating to other projection directions.

## Claims

1. An image pick-up apparatus (1), which comprises
- an image sensor (2) for converting a light image into an electronic image, and
- a control circuit (4) for switching the image sensor between image pick-up and image read-out,
- which light image is formed during an image period succeeded by an afterglow period during which a light intensity of the light image decreases, wherein
- the control circuit (4) is arranged
- to generate an image read-out signal which indicates a nearly vanishing light intensity at an end of the afterglow period, and
- to switch the image sensor (2) to image read-out by way of said image read-out signal.

2. An image pick-up apparatus (1) as claimed in Claim 1, wherein
- the image pick-up apparatus (1) comprises an auxiliary light detection system (35) for deriving a light intensity signal from the light intensity of the light image, and
- the control circuit (4) is arranged to generate the image read-out signal in dependence on the light intensity signal.

3. An image pick-up apparatus (1) as claimed in Claim 1, wherein
- the control circuit (4) is provided with a delay circuit (37) in order to apply the image read-out signal to the image sensor (2), with a delay after the reception of a stop signal indicating the end of the image period.

4. An X-ray examination apparatus (40) for forming an X-ray image on an entrance screen (23) of an X-ray image intensifier (24) by irradiating an object (20), arranged between an X-ray source (21) and the X-ray image intensifier (24), by means of an X-ray beam (22) emitted by the X-ray source (21), wherein the X-ray examination apparatus (40) comprises an image pick-up apparatus (1) as claimed in Claim 1 or 2 for picking up a light image which is derived from the X-ray image on an exit window (26) of the X-ray image intensifier (24).

5. An X-ray examination apparatus (40) for forming an X-ray image on an entrance screen (23) of an X-ray image intensifier (24) by irradiating an object (20), arranged between an X-ray source (21) and the X-ray image intensifier (24), by means of an X-ray beam (22) emitted by the X-ray source (21), wherein
- the X-ray examination apparatus (40) comprises an image pick-up apparatus (1) as claimed in Claim 3 for picking up a light image which is derived from the X-ray image on an exit window (26) of the X-ray image intensifier (24), and
- the X-ray source is coupled to an input of the control circuit in order to supply the control circuit (4) with the stop signal at the end of an X-ray pulse.

6. A method of converting a light image into an electronic image signal by means of an image pick-up apparatus (1) provided with an image sensor (2),
- which light image is formed during an image period succeeded by an afterglow period during which a light intensity of the light image decreases,
- the light image being converted into an electronic image in the image sensor (2),
- the image sensor (2) is switched to image read-out in order to read out the electronic image as an electronic image signal and
- an image read-out signal is generated which indicates a nearly vanishing light intensity at an end of the afterglow period,
- the image sensor (2) is switched to image read-out by said image read-out signal.

## Patentansprüche

1. Bildaufnahmegerät (1) mit
- einem Bildsensor (2) zum Umwandeln eines optischen Bildes in ein elektronisches Bild, und
- einer Steuerschaltung (4) zum Schalten des Bildsensors zwischen Bildaufnahme und Bildauslesen,
- wobei das optische Bild während einer Bildperiode gebildet wird, der eine Nachleuchtperiode folgt, in der eine Lichtstärke des optischen Bildes abnimmt, wobei
- die Steuerschaltung (4) ausgebildet ist,
- ein Bildauslesesignal zu generieren, das eine beinahe verschwindende Lichtstärke an einem Ende der Nachleuchtperiode anzeigt, und
- mit Hilfe des genannten Bildauslesesignals den Bildsensor (2) auf Bildauslesen zu schalten.

2. Bildaufnahmegerät (1) nach Anspruch 1, wobei
- das Bildaufnahmegerät (1) ein Hilfslichtdetektionssystem (35) zum Ableiten eines Lichtstärkesignals aus der Lichtstärke des optischen Bildes umfasst, und
- die Steuerschaltung (4) ausgebildet ist, das Bildauslesesignal in Abhängigkeit von dem Lichtstärkesignal zu generieren.

3. Bildaufnahmegerät (1) nach Anspruch 1, wobei
- die Steuerschaltung (4) mit einer Verzögerungsschaltung (37) versehen ist, um das Bildauslesesignal dem Bildsensor (2) nach Empfang eines das Ende der Bildperiode anzeigenden Stoppsignals mit einer Verzögerung zuzuführen.

4. Röntgenuntersuchungsgerät (40) zum Bilden eines Röntgenbildes auf einem Eintrittsschirm (23) eines Röntgenbildverstärkers (24) durch Bestrahlen eines zwischen einer Röntgenquelle (21) und dem Röntgenbildverstärker (24) angeordneten Objekts (20) mit einem von der Röntgenquelle (21) emittierten Röntgenstrahlenbündel (22), wobei das Röntgenuntersuchungsgerät (40) ein Bildaufnahmegerät (1) nach Anspruch 1 oder 2 umfasst, zum Aufnehmen eines aus dem Röntgenbild an einem Austrittsfenster (26) des Röntgenbildverstärkers (24) abgeleiteten optischen Bildes.

5. Röntgenuntersuchungsgerät (40) zum Bilden eines Röntgenbildes auf einem Eintrittsschirm (23) eines Röntgenbildverstärkers (24) durch Bestrahlen eines zwischen einer Röntgenquelle (21) und dem Röntgenbildverstärker (24) angeordneten Objekts (20) mit einem von der Röntgenquelle (21) emittierten Röntgenstrahlenbündel (22), wobei
- das Röntgenuntersuchungsgerät (40) ein Bildaufnahmegerät (1) nach Anspruch 3 umfasst, zum Aufnehmen eines aus dem Röntgenbild an einem Austrittsfenster (26) des Röntgenbildverstärkers (24) abgeleiteten optischen Bildes, und
- die Röntgenquelle mit einem Eingang der Steuerschaltung gekoppelt ist, um der Steuerschaltung (4) am Ende eines Röntgenimpulses das Stoppsignal zuzuführen.

6. Verfahren zum Umwandeln eines optischen Bildes in ein elektronisches Bildsignal mit Hilfe eines mit einem Bildsensor (2) versehenen Bildaufnahmegerätes (1),
- welches optische Bild während einer Bildperiode gebildet wird, der eine Nachleuchtperiode folgt, in der eine Lichtstärke des optischen Bildes abnimmt,
- wobei das optische Bild in dem Bildsensor (2) in ein elektronisches Bild umgewandelt wird,
- der Bildsensor (2) auf Bildauslesen geschaltet wird, um das elektronische Bild als elektronisches Bildsignal auszulesen, und
- ein Bildauslesesignal generiert wird, das eine beinahe verschwindende Lichtstärke an einem Ende der Nachleuchtperiode anzeigt,
- wobei der Bildsensor (2) durch das genannte Bildauslesesignal auf Bildauslesen geschaltet wird.

## Revendications

1. Appareil de prise d'images (1), qui comprend
- un détecteur d'images (2) permettant de convertir une image lumineuse en une image électronique et
- un circuit de commande (4) permettant de commuter le détecteur d'images entre la prise d'images et la lecture d'images
- laquelle image lumineuse est formée pendant une période d'image suivie d'une période de persistance pendant laquelle une intensité lumineuse de l'image lumineuse diminue, dans laquelle
- le circuit de commande (4) est conçu
- pour engendrer un signal de lecture d'images qui indique une disparition pratiquement complète de l'intensité lumineuse à la fin de la période de persistance et
- pour commuter le détecteur d'images (2) à la lecture d'images à l'aide dudit signal de lecture d'image.

2. Appareil de prise d'images (1) selon la revendication 1, dans lequel
- l'appareil de prise d'images (1) est muni d'un système de détection de lumière auxiliaire (35) pour dériver un signal d'intensité lumineuse de l'intensité lumineuse de l'image lumineuse et
- le circuit de commande (14) est conçu pour engendrer le signal de lecture d'image en fonction du signal d'intensité lumineuse.

3. Appareil de prise d'images (1) selon la revendication 1, dans lequel
- le circuit de commande (4) est muni d'un circuit à retard (37) afin de fournir le signal de lecture d'image au détecteur d'images (2) avec un retard déterminé après la réception d'un signal d'arrêt indiquant la fin de la période d'images.

4. Appareil d'examen à rayons X (40) pour la formation d'une image de rayons X sur un écran d'entrée (23) d'un intensificateur d'images de rayons X (24) par irradiation d'un objet (20) disposé entre une source de rayons X (21) et l'intensificateur d'images de rayons X (24), à l'aide d'un faisceau de rayons X (22) émis par la source de rayons X (21), dans lequel l'appareil d'examen à rayons X (40) est muni d'un appareil de prise d'images (1) selon la revendication 1 ou 2 pour la prise d'une image lumineuse qui est dérivée de l'image de rayons X présente sur une fenêtre de sortie (26) de l'intensificateur d'images de rayons X (24).

5. Appareil d'examen à rayons X (40) pour la formation d'une image de rayons X sur un écran d'entrée (23) d'un intensificateur d'images de rayons X (24) par irradiation d'un objet (20), disposé entre une source de rayons X (21) et l'intensificateur d'images de rayons X (24), à l'aide d'un faisceau de rayons X (22) émis par la source de rayons X, dans lequel
- l'appareil d'examen à rayons X (40) est muni d'un appareil prise d'images (1) comme revendiqué dans la revendication 3 pour la prise d'une image lumineuse qui est dérivée de l'image de rayons X présente sur une fenêtre d'images (26) de l'intensificateur d'images de rayons X (24) et
- la source de rayons X est couplée à une entrée du circuit de commande afin de fournir le signal d'arrêt au circuit de commande (4) à la fin d'une impulsion de rayons X.

6. Procédé pour la conversion d'une image lumineuse en un signal d'image électronique à l'aide d'un appareil de prise d'images (1) muni d'un détecteur d'images (2),
- laquelle image lumineuse est formée pendant une période d'image suivie d'une période de persistance pendant laquelle une intensité lumineuse de l'image lumineuse diminue,
- l'image lumineuse étant convertie en une image électronique dans le détecteur d'images (2),
- le détecteur d'images (2) est commuté à la lecture d'images afin de lire l'image électronique comme un signal d'image électronique et
- un signal de lecture d'image est engendré et indique une disparition pratiquement complète de l'intensité lumineuse à une fin de la période de persistance,
- le détecteur d'images (2) est commuté à la lecture d'images par ledit signal de lecture d'images.
